# EUROPÄISCHE PATENTSCHRIFT

(11) **EP 0 401 528 B1**
(45) Veröffentlichungstag und Bekanntmachung des Hinweises auf die Patenterteilung: **06.04.1994**
(21) Anmeldenummer: 90108680.1
(22) Anmeldetag: 09.05.1990
(51) Int. Cl.: A22C 21/00

(54) **Haltevorrichtung zur Halterung von Geflügelkörper während deren Bearbeitung**
Support device for slaughtered poultry during treatment
Dispositif pour maintenir des volailles abattues pendant leur traitement

(30) Priorität: 06.06.1989 DE 3918345
(43) Veröffentlichungstag der Anmeldung: 12.12.1990
(73) Patentinhaber: NORDISCHER MASCHINENBAU RUD. BAADER GMBH + CO KG, 23560 Lübeck (DE)
(72) Erfinder: Diesing, Karl-Heinz, D-2400 Lübeck (DE)

(56) Entgegenhaltungen:
- EP-A- 0 118 963
- EP-A- 0 230 064
- EP-A- 0 254 332
- EP-A- 0 336 162
- DE-C- 3 444 430

## Beschreibung

Die Erfindung betrifft eine Haltevorrichtung zur Halterung von entweideten Geflügelkörpern oder Teilen davon während der Bearbeitung, mit einem Stützkörper, auf welchen das Bearbeitungsgut aufschiebbar ist und der mit einer dasselbe wenigstens an der Innenkontur des Brustbeins stützenden Stützfläche, sowie mit steuerbaren Mitteln zum Fixieren des Bearbeitungsgutes ausgestattet ist.

Solche Haltevorrichtungen sind in vielfachen Ausführungen bekannt.

So ist aus der DE-PS 34 44 430 eine Halterung in Form eines Stützklotzes für die Aufnahme der Körper geschlachteten Geflügels bekannt. Mehrere dieser Stützklötze sind an einem umlaufend angetriebenen Endlosförderer angeordnet, wobei jeder Stützklotz an seinem in Förderrichtung vorauslaufenden Ende eine Anschlagfahne trägt, hinter welcher ein aus der Stützfläche des Stützklotzes aussteuerbarer Haltestift angebracht ist. Dieser Haltestift wird im Beschickbereich der Vorrichtung zurückgezogen gehalten und unmittelbar vor Eintritt des Stützklotzes in den Arbeitsbereich derselben gegen die Innenseite der Brustplatte (corpus sterni) gesteuert, wodurch der Haltestift in das dort befindliche Sehnengeflecht eindringt und für eine formschlüssige Mitnahme des Geflügelkörpers sorgt.

Diese Halterung ist lediglich zur Aufnahme von Brustkappen geeignet, d. h. einen Geflügelkörperabschnitt, bei dem der Rückgratbereich herausgetrennt und damit eine Aufsattelung möglich ist. Für die Bearbeitung von nicht aufsattelbaren Vorderhälften, d. h. von Abschnitten, die durch einen schräggelegten Querschnitt durch den Geflügelkörper erhalten werden und in der Halsöffnung aufgenommen werden müssen, ist diese Halterung nicht geeignet.

Aus der EP 254 332 ist weiter eine Haltevorrichtung für Brustkappen bekannt. Sie umfaßt einen Aufnahmekopf mit einem hakenförmigen Anschlagelement, gegen das ein aus der Stützfläche heraustretender Haltedorn steuerbar ist. Die Brustkappe wird mit dem Halsbereich voraus und unter Auflage der Brustbeinplatte (corpus sterni) auf der Stützfläche gegen das Anschlagelement geschoben, so daß dieses mit seinem hakenförmigen Teil die Brustbeinplatte (corpus sterni) im Bereich zwischen den Rabenbeinen (coracoid) übergreift. Die Festlegung der Brustkappe erfolgt dann durch den Haltedorn, der in das in diesem Bereich befindliche oben erwähnte Sehnengeflecht eindringt und eine Klammerung bewirkt.

Dieser Klammermechanismus ist auch bei einer modifizierten Ausführung der bekannten Haltevorrichtung vorgesehen, bei der der Aufnahmekopf hornartig ausgebildet ist, so daß die Halterung von Vorderhälften möglich ist.

Nachteilig ist dabei jedoch, daß der Beschickvorgang umständlich und daher zeitraubend ist insofern, als die Vorderhälften erst aufgestülpt und dann zur Fixierung wieder rückgezogen werden müssen, bis die Brustbeinplatte mit ihrer zwischen den Rabenbeinen liegenden Stirnkante an dem Halter des Anschlagelementes anliegt.

Ein weiterer Nachteil dieser Ausführung liegt darin, daß die nach der Bearbeitung auf der Haltevorrichtung verbleibende Karkasse nur in gleicher Weise umst1ndlich abgenommen werden kann.

Schließlich ist aus der EP 0336 162 A1 eine Klemmeinrichtung für die Halterung von Brustkappen von Geflügelkörpern bekannt. Diese Einrichtung besteht aus einem steuerbaren inneren und einem festen äußeren Zangenschenkel, die beide auf einem Förderer montiert sind. Der feste Zangenschenkel ist stegförmig ausgebildet und wird in einem Spalt zwischen einem Paar dachförmig geneigter Führungsflächen so geführt, daß der Klemmmechanismus aus dem Spalt herausragt.

Die Beschickung erfolgt durch Einschieben einer auf den Führungsflächen aufgelegten Brustkappe in den Klemmspalt zwischen dem inneren und äußeren Zangenschenkel. Dabei ist der enteilenden Klemmeinrichtung zu folgen, bis der innere Zangenschenkel in die Klemmstellung gesteuert ist. Klemmpunkt ist das Brustbein im Bereich zwischen den Rabenbeinen.

Diese Einrichtung ist nur für die Aufnahme von Brustkappen geeignet. Darüber hinaus ist sie sicherheitstechnisch problematisch und in ergonomischer Hinsicht unbefriedigend.

Es ist die Aufgabe der Erfindung, eine Haltevorrichtung der eingangs genannten Art vorzuschlagen, die einfach zu beschicken und universell, d. h. für beliebige Ausgangsprodukte einsetzbar ist. Darüberhinaus soll eine exakte Positionierung erreicht werden, um eine präzise maschinelle Bearbeitung bzw. Gewinnung des Fleisches mit höchster Ausbeute zu ermöglichen.

Diese Aufgabe wird erfindungsgemäß dadurch gelöst, daß die Mittel zum Fixieren eine Klemmeinrichtung aus einem gegen den Stützkörper bewegbaren Klemmhebel umfassen, der in seiner Aktivstellung einen das Bearbeitungsgut gegen die Beschickrichtung hinterfassenden Anschlag bildet.

Die damit erzielbaren Vorteile bestehen insbesondere darin, daß die derart gestaltete Klemmeinrichtung in der deaktivierten Stellung ein unbehindertes Beschicken des Stützkörpers gestattet, eine automatische Positionierung bewirkt und eine sichere Fixierung gewährleistet.

Nach einer bevorzugten Ausführungsform kann die Klemmeinrichtung mit einem Klemmhebel versehen sein, der um eine unterhalb der Stützfläche des Stützkörpers befindliche Achse schwenkbar gelagert ist , dessen freies Ende die Klemmfläche des Klemmhebels bildet und dessen anderes Ende mit einem Kurbelhebel in Verbindung steht. Dabei erfolgt die Positionierung zweckmäßigerweise dadurch, daß die Innenkontur des Ringsegmentes als Segment einer Spirale geformt ist, deren Mittelpunkt die Achse des Kurbelhebels ist, wobei eine breitere Stützbasis an dem positionierenden Anschlag entsteht, wenn der Klemmhebel aus zwei im Bereich der Klemmfläche vereinigten, nebeneinander angeordneten Ringsegmenten besteht.

Daß der Kurbelhebel mit einem Kniehebelmechanismus in Verbindung steht, welcher durch äußere Einwirkung betätigbar ist, hat den Vorteil, daß die Klemmeinrichtung im aktivierten Zustand selbsthaltend ist. Durch Ausbildung des Gegenpols zu der Klemmfläche des Klemmhebels als Stirnfläche eines Bolzens, der aus der Stützfläche des Stützkörpers herausragt und gegen die Kraft einer Feder verdrängbar geführt ist, kann die Haltekraft unabhängig von der jeweiligen Größe des zu haltenden Geflügelkörpers in vorgegebenen Grenzen gehalten werden.

Zur Vereinfachung der Fertigung der Haltevorrichtung können die Mittel zum Fixieren in einem schmalen Gehäuse untergebracht sein, an welchem der Stützkörper übergestülpt befestigt wird.

Eine den hygienischen Erfordernissen entgegenkommende Ausführung ergibt sich dadurch, daß der Stützkörper auf einer Sockelplatte montierbar ist, mit der er mittels einer ohne Werkzeug auslösbaren Schnellverschlußeinrichtung verbindbar ist. Damit ist auf einfache Art und Weise möglich, den Stützkörper zum Reinigen abzunehmen und nach Bedarf auch in Reinigungsflüssigkeit zu lagern.

Für eine kontinuierliche Bearbeitung kann die Sockelplatte mit weiteren an einem umlaufend angetriebenen, endlosen Förderer befestigt sein, wobei längs der Bahn der Haltevorrichtungen gestellfeste Steuermittel zur Betätigung des Kniehebelmechanismus' angeordnet sein können.

Die erfindungsgemäße Haltevorrichtung wird nachfolgend anhand eines in der Zeichnung dargestellten Ausführungsbeispiels näher erläutert. Es zeigt
- Fig. 1: eine Seitenansicht des Stützkörpers mit eingebauter Klemmeinrichtung, teilweise geschnitten und in deaktiviertem Zustand dargetellt,
- Fig. 2: eine Darstellung des Stützkörpers entsprechend Fig. 1 mit aktiviertem Klemmechanismus und aufgesatteltem Karkassenteil eines Geflügelkörpers,
- Fig. 3: eine Stirnansicht des Stützkörpers.

Die erfindungsgemäße Haltevorrichtung 1 umfaßt einen Stützkörper 2 , der auf einer an einem endlosen Förderer 3 angeordneten Sockelplatte 4 befestigt ist. Die Sockelplatte 4 ist auf geeignete Weise in einem nicht gezeigten Maschinengestell geführt, in dem der Förderer 3 unter horizontaler Ausrichtung seines Arbeitstrums und in einer senkrechten Ebene umlaufend angetrieben gelagert ist. Der Stützkörper 2 hat die Form eines Sattels und ist mit einer Stützflache 5 und einem in Förderrichtung vorausweisenden Sattelhorn 6 ausgestattet. Dabei ist der Stützkörper 2 im wesentlichen U-förmig gestaltet, so daß er eine kompakt vormontierte Klemmeinrichtung 7 aufzunehmen vermag, an deren Gehäuse 8 der Stützkörper 2 auf geeignete Weise befestigt ist.

Die Klemmeinrichtung 7 umfaßt einen in dem Bereich des Sattelhorns 6 angeordneten Klemmhebel 9 , der um eine unterhalb der Stützfläche 5 des Stützkörper 2 befindliche, quer zu der Längsachse desselben ausgerichtete Achse 10 schwenkbar gelagert ist. Der Klemmhebel 9 weist an seinem freien Ende eine Klemmfläche 12 auf und ist aus zwei im Bereich derselben vereinigten, nebeneinander angeordneten Ringsegmenten 11 zusammengesetzt, deren andere Enden mit einem Kurbelhebel 13 in Verbindung stehen. In der Klemmstellung steht der Klemmfläche 12 des Klemmhebels 9 als Gegenpol ein Bolzen 13a gegenüber, der aus der Stützfläche 5 des Stützkörpers 2 herausragt und gegen eine nicht gezeigte Feder in den Stützkörper 2 rückdrängbar ist.

Der Kurbelhebel 13 steht mit einem Kniehebelmechanismus 14 in Verbindung. Dieser besteht aus einem Lenker 15 , der das freie Ende des Kurbelhebels 13 mit einem freien Ende eines doppelarmigen Betätigungshebels 16 gelenkig koppelt, der in der Nähe der Sockelplatte 4 um eine quer zu der Längsachse des Stützkörpers 2 angeordnete Achse 17 schwenkbar gelagert ist und mit seinem anderen freien Ende 18 aus der Sockelplatte 4 herausragt. Die gelenkigen Verbindungen zwischen dem Kurbelhebel 13 und dem Lenker 15 sowie zwischen diesem und dem Betätigungshebel 16 sind zu der Achse 17 des letzteren so angeordnet, daß sie in Klemmstellung des Klemmhebels 9 eine Streckstellung leicht überschreiten, d. h. eine solche, bei der die genannten gelenkigen Verbindungen auf einer Verbindungsgeraden liegen. Eine an der Verbindung zwischen Lenker 15 und Betätigungshebel 16 angreifende Zugfeder 19 sichert dabei sowohl die Klemmstellung, als auch die Öffnungsstellung der Klemmeinrichtung 7 .

Mit dem in Streckstellung befindlichen Betätigungshebel 16 vermag ein Auslöserhebel 20 mit einem freien Ende 21 in Kontakt zu treten, der als Winkelhebel ausgebildet ist. Das andere freie Ende 22 ragt aus der Sockelplatte 4 heraus.

Der Stützkörper 2 ist mit der Sockelplatte 4 durch eine Schnellverbindung lösbar verbunden. diese besteht aus einem an den nachlaufenden Ende des Stützkörpers 2 angeordneten Bajonett-Verschluß 23 , der aus einem Klinkenhebel 24 und einem Spannhebel 25 besteht. In der Besfestigungsstellung untergreift der Klinkenhebel 24 einen Vorsprung 26 in der Sockelplatte 4 , in welcher Stellung eine Selbsthaltung erfolgt. Das vordere Ende des Stützkörpers 2 ist mit einer in eine entsprechende Ausnehmung in der Sockelplatte 4 einschiebbaren Nase 27 versehen.

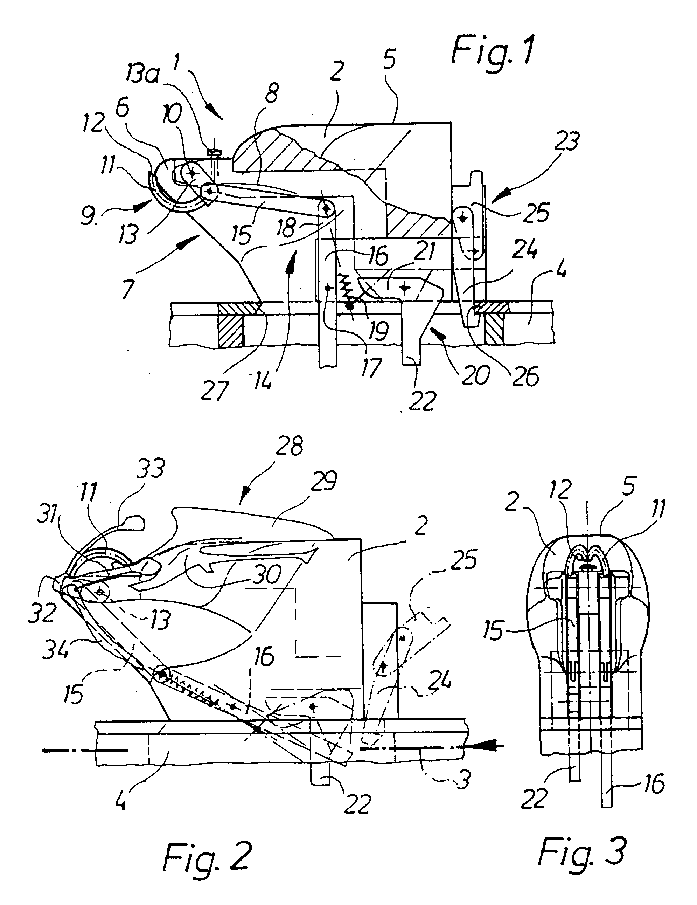

Für die Inbetriebnahme der Haltevorrichtung 1 wird diese zunächst mit entspanntem Bajonett-Verschluß 23 unter leichter Neigung in eine entsprechende Öffnung der Sockelplatte 4 mit dem Sattelhorn 6 voraus in Förderrichtung eingeschoben bis die Nase 27 anschlägt. Alsdann wird die Haltevorrichtung 1 am hinteren Ende abgesenkt, so daß der Klinkenhebel 24 des Bajonett-Verschlusses 23 ebenfalls in eine Öffnung der Sockelplatte 4 hineinragt. Nach Auflage des Stützkörpers 2 auf der Sockelplatte 4 wird der Spannhebel 25 des Bajonett-Verschlusses 23 gegen den Stützkörper 2 bewegt, wodurch der Klinkenhebel 24 den Vorsprung 26 in der Sockelplatte 4 untergreift und damit diese mit dem Stützkörper 2 verbindet. Auf diesen wird nun ein Geflügelkörper 28 aufgesattelt und zwar so, daß dessen Brustbein (sternum) 29 nach oben weist, d. h. mit der Innenfläche der Brustbeinplatte (corpus sterni) 30 auf der Stützfläche 5 des Stützkörpers 4 zur Auflage kommt und das Sattelhorn 6 aus dem Halsbereich herausragt. Damit weisen die Rabenbeine (coracoidae) 31 mit den Körpergelenken 32 der Flügel voraus, an denen auch das Gabelbein (clavicula) 33 und die Schulterblätter (scapulae) 34 anschließen. Dieses Aufsatteln ist unbehindert möglich, da die Klemmeinrichtung 7 innerhalb des Beschickbereiches einer diese Haltevorrichtung verwendenden Maschine sich in Öffnungsstellung befindet (Fig. 1). Bedingt durch den Vorschub des Stützkörpers 2 läuft das freie Ende 18 des Betätigungshebels 16 nach Verlassen des Beschickbereiches auf nicht gezeigten gestellfesten Steuermitteln auf, die eine Verschwenkung des Betätigungshebels 16 in die Strecklage des Kniehebelmechanismus' bewirken. Als Folge davon wird der Klemmhebel 9 in seine Klemmstellung verschwenkt, wobei die Brustbeinplatte 30 in ihrem Endbereich zwischen den Rabenbeinen 31 zwischen der Klemmfläche 12 des Klemmhebels 9 und deren Gegenpol, dem Bolzen 13a eingeklemmt wird. Vor Erreichen der Klemmstellung hat die Anordnung der Innenkontur der Ringsegmente 11 des Klemmhebels 9 auf einer Spiralbahn in bezug auf die Achse 10 bewirkt, daß der Geflügelkörper 28 mit fortschreitendem Auftauchen des Klemmhebels 9 weiter auf den Stützkörper 2 aufgeschoben wird. Die Fixierung des Geflügelkörpers 28 erfolgt daher jeweils dann, wenn das Sattelhorn 6 in der Beuge zwischen den Schulterblättern 34 und den Körpergelenken 32 anliegt, so daß jeweils eine größenunabhängige Positionierung in bezug auf diesen Punkt erreicht wird.

Die Freigabe des Geflügelkörpers 28 erfolgt durch Auflauf des freien Endes 22 des Auslöserhebels 20 auf ebenfalls nicht gezeigte, gestellfeste Steuermittel mit der Wirkung, daß der Kniehebelmechanismus 14 aus der Strecklage gedrängt und der Klemmhebel 9 in die Öffnungsstellung gebracht wird.

Nach beendetem Einsatz der Haltevorrichtung 1 kann diese leicht ohne Zuhilfenahme von Werkzeugen von ihrer Sockelplatte 4 gelöst werden, indem der Spannhebel 25 von dem Stützkörper 2 abgedrückt wird. Dadurch ist es möglich, diesen auf besonders einfache Art und Weise durch Lagern in einer Reinigungsflüssigkeit gründlich zu reinigen.

Es sei darauf hingewiesen, daß die erfindungsgemäße Haltevorrichtung 1 selbstverständlich in beliebiger Weise mit einem Förderer verbunden sein kann.

## Patentansprüche

1. Haltevorrichtung (1) zur Halterung von entweideten Geflügelkörpern (28) oder Teilen davon während der Bearbeitung, mit einem Stützkörper (2) , auf welchen das Bearbeitungsgut aufschiebbar ist und der mit einer dasselbe wenigstens an der Innenkontur des Brustbeins (29) stützenden Stützfläche (5) , sowie mit steuerbaren Mitteln zum Fixieren des Bearbeitungsgutes ausgestattet ist, **dadurch gekennzeichnet,** daß die Mittel zum Fixieren eine Klemmvorrichtung (7) aus einem gegen den Stützkörper (2) bewegbaren Klemmhebel (9) umfassen, der in seiner Aktivstellung einen das Bearbeitungsgut gegen die Beschickrichtung hinterfassenden Anschlag bildet.

2. Haltevorrichtung nach Anspruch 1, **dadurch gekennzeichnet,** daß der Klemmhebel (9) um eine unterhalb der Stützfläche (5) des Stützkörpers (2) befindliche Achse (10) schwenkbar gelagert ist und die Gestalt eines Ringsegmentes (11) aufweist, dessen freies Ende die Klemmfläche (12) des Klemmhebels (9) bildet und dessen anderes Ende mit einem Kurbelhebel (13) in Verbindung steht.

3. Haltevorrichtung nach Anspruch 2, **dadurch gekennzeichnet,** daß die Innenkontur des Ringsegmentes (11) als Segment einer Spirale geformt ist, deren Mittelpunkt die Achse (10) ist.

4. Haltevorrichtung nach Anspruch 2 oder 3 , **dadurch gekennzeichnet,** daß der Klemmhebel (9) aus zwei im Bereich der Klemmflache (12) vereinigten, nebeneinander angeordneten Ringsegmenten (11) besteht.

5. Haltevorrichtung nach einem der Ansprüche 1 bis 4 , **dadurch gekennzeichnet,** daß der Kurbelhebel (13) mit einem Kniehebelmechanismus (14) in Verbindung steht, welcher durch äußere Einwirkung betätigbar ist.

6. Haltevorrichtung nach einem der Ansprüche 1 bis 5 , **dadurch gekennzeichnet,** daß der Gegenpol zu der Klemmfläche (12) des Klemmmhebels (9) durch die Stirnfläche eines Bolzens (13a) gebildet wird, der aus der Stützfläche (5) des Stützkörpers (2) herausragt und gegen die Kraft einer Feder verdrängbar geführt ist.

7. Haltevorrichtung nach einem der Ansprüche 1, bis 6 , **dadurch gekennzeichnet,** daß d ie Mittel zum Fixieren in einem schmalen Gehäuse (8) untergebracht sind, an welchem der Stützkörper (2) übergestülpt befestigt wird.

8. Haltevorrichtung nach Anspruch 7, **dadurch gekennzeichnet,** daß der Stützkörper (2) auf einer Sockelplatte (4) montierbar ist, mit der er mittels einer ohne Werkzeug auslösbaren Schnellverschlußeinrichtung (23) verbindbar ist.

9. Haltevorrichtung nach einem der Ansprüche 6 bis 8, **dadurch gekennzeichnet,** daß die Sockelplatte (4) mit weiteren an einem umlaufend angetriebenen, endlosen Förderer (3) befestigt ist, wobei längs der Bahn der Haltevorrichtungen (1) gestellfeste Steuermittel zur Bestätigung des Kniehebelmechanismus' (14) angeordnet sind.

## Claims

1. Holding device (1) for the holding of gutted poultry carcasses (28) or parts thereof during processing, with a support body (2), in which the stock to be processed is displaceable and which is equipped with support surface (5) supporting the same at least at the inner contour of the breastbone (29) as well as with controllable means for the fixing of the stock to be processed, characterised thereby that the means for fixing comprises a clamping device (7) of a clamping lever (9), which is movable against the support body (2) and which in its active setting forms an abutment catching behind the processing stock against the feed direction.

2. Holding device according to claim 1, characterised thereby that the clamping lever (9) is mounted to be pivotable about an axis (10) disposed below the support surface (5) of the support body (2) and has the shape of an annular segment (11), the free end of which forms the clamping surface (12) of the clamping lever (9) and the other end of which stands in connection with a crank lever (13).

3. Holding device according to claim 2, characterised thereby that the inner contour of the annular segment (11) is formed as a segment of a spiral, the centre point of which is the axis (10).

4. Holding device according to claim 2 or 3, characterised thereby that the clamping lever (9) consists of two annular segments (11) arranged alongside one another and united in the region of the clamping surface (12).

5. Holding device according to one of claims 1 to 4, characterised thereby that the crank lever (13) stands in connection with a toggle joint mechanism (14), which is actuable through external action.

6. Holding device according to one of claims 1 to 5, characterised thereby that the counterpoint to the clamping surface (12) of the clamping lever (9) is formed by the end face of a bolt (13a), which projects out of the support surface (5) of the support body (2) and is guided to be displaceable against the force of a spring.

7. Holding device according to one of claims 1 to 6, characterised thereby that the means for fixing are accommodated in a narrow housing (8), to which the support body (2) is fastened bent over.

8. Holding device according to claim 7, characterised thereby that the support body (2) is mountable on a base plate (4), with which it is connectible by a snap closure device (23) releasable without tools.

9. Holding device according to one of claims 6 to 8, characterised thereby that the base plate (4) is further fastened to an endless conveyor (3) driven to circulate, wherein control means, which are fixed to the frame, for the actuation of the toggle joint mechanism (14) are arranged along the path of the holding device (1).

## Revendications

1. Dispositif de support (1) destiné à maintenir des corps de volailles (28) vidés, ou des parties de ceux-ci, au cours du traitement, comportant un corps d'appui (2) sur lequel peut être engagé le produit à traiter, et qui est équipé d'une surface d'appui (5) soutenant ce produit au moins sur le contour intérieur du sternum (29), ainsi que des moyens destinés à fixer le produit à traiter et susceptibles d'être commandés, caractérisé en ce que les moyens destinés à la fixation comprennent un dispositif de serrage (7) constitué par un levier de serrage (9), qui peut être déplacé vers le corps d'appui (2), et qui dans sa position active, forme une butée s'engageant derrière le produit à traiter, à l'encontre de la direction de chargement.

2. Dispositif de support selon la revendication 1, caractérisé en ce que le levier de serrage (9) est monté de manière à pouvoir pivoter autour d'un axe (10) se trouvant au-dessous de la surface d'appui (5) du corps d'appui (2), et présente une configuration en segment annulaire (11), dont l'extrémité libre forme la surface de serrage (12) du levier de serrage (9), et dont l'autre extrémité est solidaire d'un levier à manivelle (13).

3. Dispositif de support selon la revendication 2, caractérisé en ce que le contour intérieur du segment annulaire (11) présente une forme de segment de spirale dont le centre est constitué par l'axe (10).

4. Dispositif de support selon la revendication 2 ou 3, caractérisé en ce que le levier de serrage (9) est constitué de deux segments annulaires (11) réunis dans la zone de la surface de serrage (12) et disposés côte à côte.

5. Dispositif de support selon l'une des revendications 1 à 4, caractérisé en ce que le levier à manivelle (13) est réuni à un mécanisme à genouillère (14) pouvant être actionné par un effet extérieur.

6. Dispositif de support selon l'une des revendications 1 à 5, caractérisé en ce que le pôle conjugué à la surface de serrage (12) du levier de serrage (9), est formé par la surface frontale d'un boulon (13a) faisant saillie hors de la surface d'appui (5) du corps d'appui (2), et guidée de manière à pouvoir être repoussée à l'encontre de la force d'un ressort.

7. Dispositif de support selon l'une des revendications 1 à 6, caractérisé en ce que les moyens destinés à la fixation sont logés dans un carter étroit (8) sur lequel vient se fixer le corps d'appui (2) en recouvrement.

8. Dispositif de support selon la revendication 7, caractérisé en ce que le corps d'appui (2) peut être monté sur une plaque formant semelle (4), à laquelle il peut être solidarisé au moyen d'un dispositif de verrouillage rapide (23) pouvant être déclenché sans outil.

9. Dispositif de support selon l'une des revendications 6 à 8, caractérisé en ce que la plaque formant semelle (4) est fixée avec d'autres, sur un transporteur sans fin (3) entraîné en révolution, des moyens de commande fixes sur le bâti et destinés à l'actionnement du mécanisme à genouillère (14), étant disposés le long de la voie des dispositifs de support (1).
